# EUROPEAN PATENT APPLICATION

(11) **EP 4 556 145 A1**
(43) Date of publication of application: **21.05.2025**
(21) Application number: 24209193.2
(22) Date of filing: 28.10.2024
(51) Int. Cl.: B22F 10/28, B22F 10/31, B22F 12/44, B22F 12/90, B23K 26/04, B23K 26/046, B33Y 30/00, G02B 7/00, G11B 7/09

(54) **METHODS AND APPARATUS TO MEASURE FOCAL LENGTH OF A THREE-DIMENSIONAL OPTICAL SYSTEM**

(30) Priority: 06.11.2023 US 202363596537 P; 17.10.2024 US 202418918841
(71) Applicant: General Electric Company, Evendale, OH 45215 (US)
(72) Inventor: Zeulner, Fabian, 96215 Lichtenfels (DE); Dicken, Christian, 96215 Lichtenfels (DE)
(74) Representative: Hafner & Kohl PartmbB

(57) **Abstract**

Methods, apparatus, systems, and articles of manufacture are disclosed to implement and operate an additive manufacturing machine (200) with focal length error determination and correction. An example apparatus includes a main laser (112) to create a main laser beam of the AM machine, the main laser beam used to fuse particle powder together in an AM process; a focus unit (108) to focus the main laser beam at a specified distance, the focus unit also including a measurement beam; a semi-transparent mirror (118) to split a backreflected signal, created from a reflection of the measurement beam from a powder surface, from the measurement beam; and a sensor element (128) to measure a focal distance error from the backreflected signal. The example apparatus can also include a measurement laser (120) to generate a measurement laser beam with the main laser beam.

## Description

### CROSS-REFERENCE TO RELATED APPLICATION

The present application claims priority to U.S. Provisional Patent Application Number 63/596,537, filed on November 6, 2023. U.S. Provisional Patent Application Number 63/596,537 is hereby incorporated by reference for all purposes.

### FIELD OF THE DISCLOSURE

This disclosure relates generally to additive manufacturing and, more particularly, to measuring the focal length of an optical system in an additive manufacturing apparatus.

### BACKGROUND

In recent years, many additive manufacturing (AM) methods employ a laser to fuse small particles of material together. For example, Selective Laser Sintering (SLS) uses a laser to sinter powdered material, most commonly metal. In order to do this effectively, the laser must be focused at a precise distance to target a sharp point on a powder surface containing small particles of plastic, metal, ceramic, or glass. This focused laser fuses the powder material together into a desired shape specified by the AM machine. The focusing is achieved through a focal optical system in the AM machine. These focal systems are typically calibrated when the machine is installed, and are only checked at the next service interval.

### BRIEF DESCRIPTION OF THE DRAWINGS

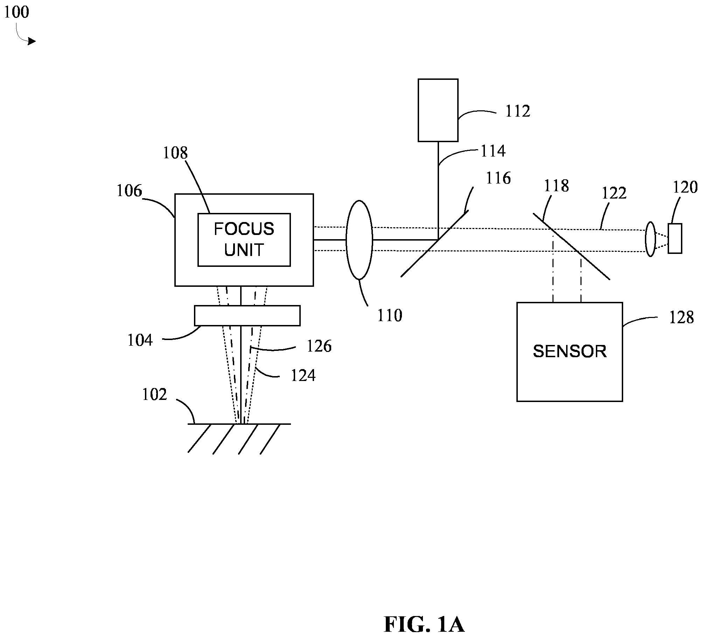

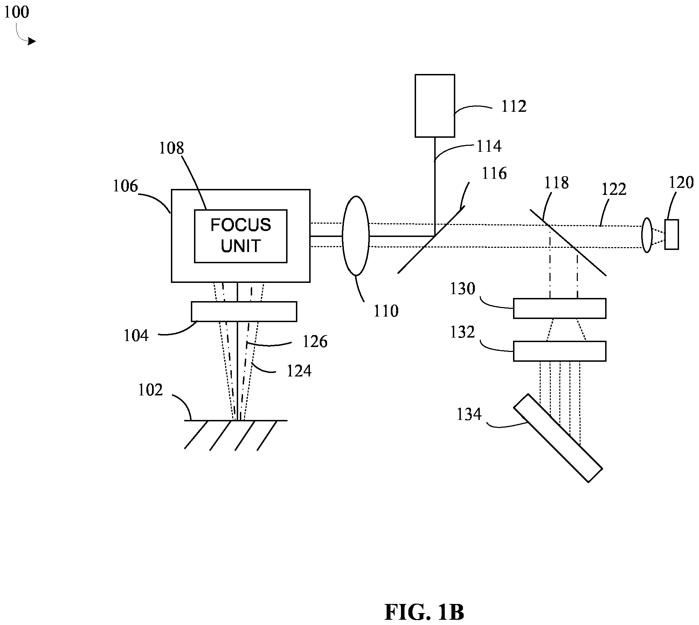

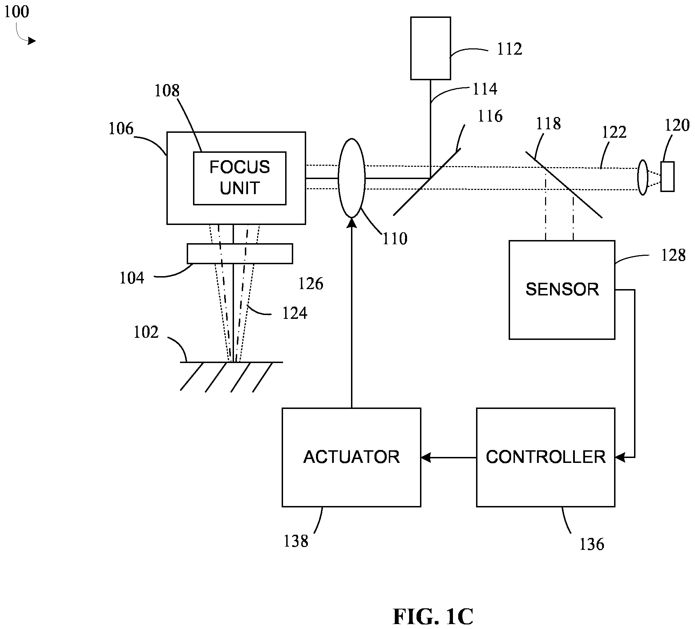

FIGS. 1A-1C show example additive manufacturing (AM) systems arranged to capture backreflected signals from a measurement laser reflected off of a powder surface to find a focal distance error of the AM system. FIG. 1A shows an example system including a separate measurement laser to couple with the main laser of the AM system to measure the focal distance error. FIG. 1B is the system of FIG. 1A in which a cylindrical lens and one-dimensional (1D) complementary metal-oxide-semiconductor (CMOS) sensor are used to implement the example sensor of FIG. 1A. FIG. 1C is the system of FIG. 1A with the addition of a controller and an actuator to complete a closed-loop feedback system for the focal distance error.

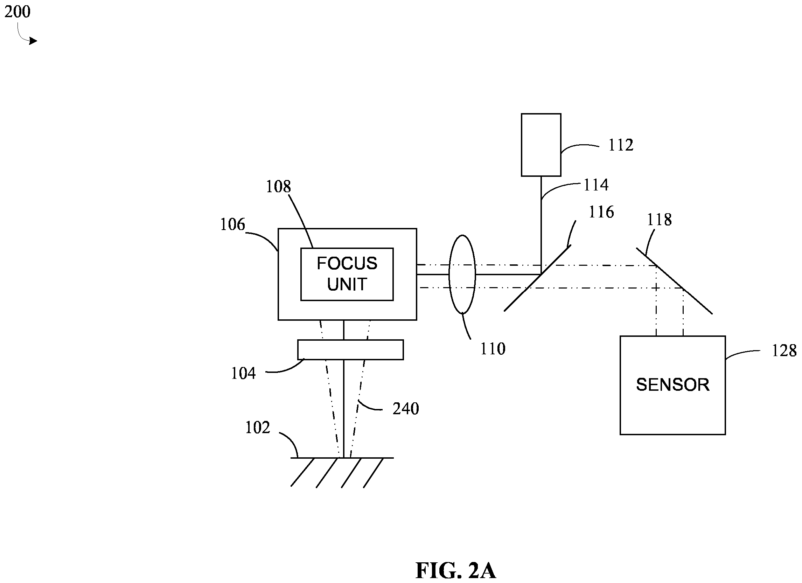

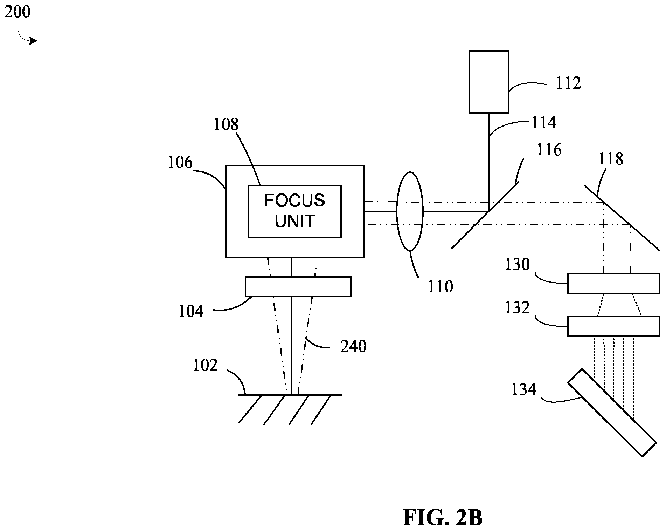

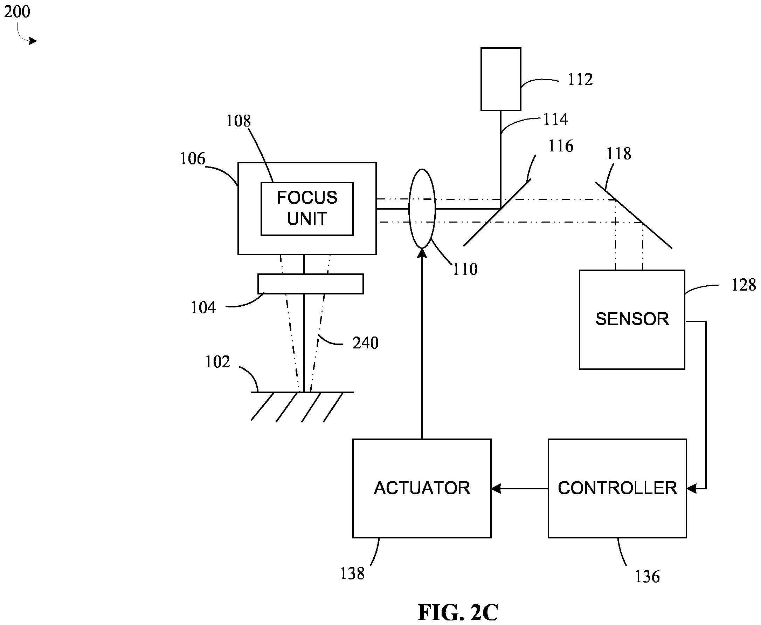

FIGS. 2A-2C show example additive manufacturing (AM) systems arranged to capture backreflected signals from a measurement laser reflected off of a powder surface to find a focal distance error of the AM systems. FIG. 2A shows an example system that captures the backreflected main laser of the AM system to measure the focal distance error. FIG. 2B is the system of FIG. 2A in which a cylindrical lens and 1D CMOS sensor are used to implement the example sensor of FIG. 2A. FIG. 2C is the system of FIG. 2A with the addition of a controller and an actuator to complete a closed-loop feedback system for the focal distance error.

FIG. 3 is a diagram focusing on the focal distance measurement components, including an astigmatic lens and quadrant diode implementation of the example sensor, of FIG. 1A.

FIGS. 4A and 4B show the principles of operation of an astigmatic lens and quadrant diode implementation of the example sensor of FIG. 1A. FIG. 4A shows the astigmatic lens, the modified signal after the astigmatic lens, and the projected cross sections of the modified signal at various points. FIG. 4B is a graph showing the relationship between focal distance error and voltage output of the quadrant diode.

FIGS. 5A-5C show example states of operation of the astigmatic lens and quadrant diode sensor of FIG. 4A. FIG. 5A shows the example sensor when the example system is in focus. FIG. 5B shows the example sensor when the example system has a focal distance greater than the desired focal distance. FIG. 5C shows the example sensor when the example system has a focal distance less than the desired focal distance.

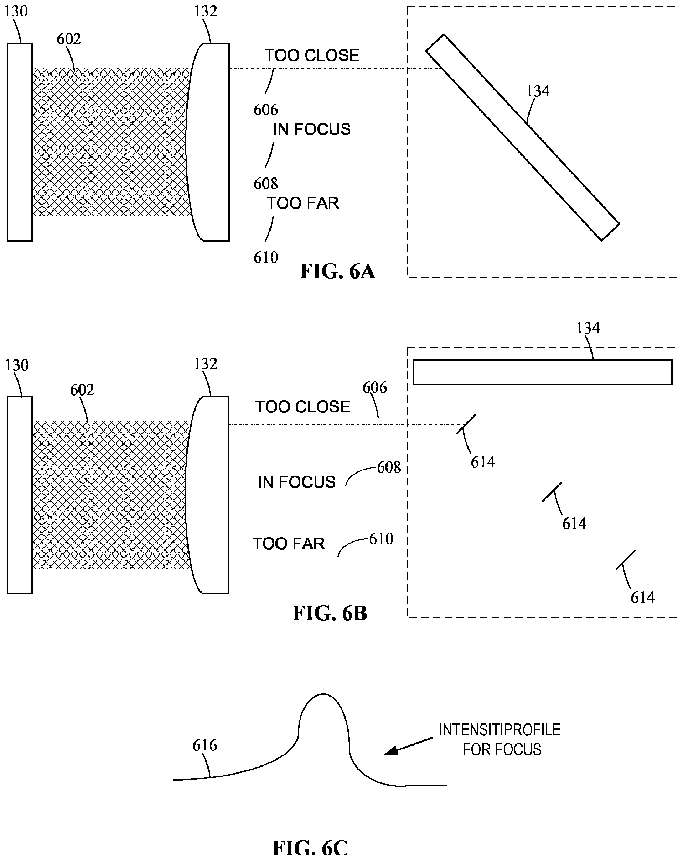

FIGS. 6A-6C show the principles of operation of a cylindrical lens and 1D CMOS sensor implementation of the example sensor of FIG. 1A as shown in FIG 1B. FIG. 6A shows an example implementation where the 1D CMOS sensor is angled relative to the cylindrical lens such that the distance from the cylindrical lens to the sensor is a function of the sensor position. FIG. 6B shows an example implementation where example step mirrors are used to replicate the effect of the angled sensor. FIG. 6C shows a graph of an intensity profile of the 1D CMOS sensor as a function of the position on the 1D CMOS sensor.

FIG. 7 is a control diagram showing the closed-loop control system of the example system of FIG. 1C.

FIG. 8 is a flowchart representative of operation of the system of FIG. 1A according to the control diagram of FIG. 7.

FIG. 9 is a flowchart representative of operation of the example system of FIG. 1A and block 805 of FIG. 8.

FIG. 10 is a flowchart representative of operation of the example sensor of FIG. 1A and block 925 of FIG. 9.

The figures are not to scale. Instead, the thickness of the layers or regions may be enlarged in the drawings. In general, the same reference numbers will be used throughout the drawing(s) and accompanying written description to refer to the same or like parts. As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other. Stating that any part is in "contact" with another part means that there is no intermediate part between the two parts.

### DETAILED DESCRIPTION

Additive manufacturing is a process by which a three-dimensional structure is built, usually in a series of layers, based on a digital model of the structure. While some examples of additive manufacturing technology rely on sintering or melting/fusing using an energy source to form the structure, rather than "printing", in which material is deposited at select locations, the term "print" is often used to describe the additive manufacturing process (e.g., three-dimensional (3D) printing, 3D rapid prototyping, etc.). Examples of additive manufacturing techniques include Fused Deposition Modeling (FDM), Electron Beam Melting (EBM), Laminated Object Manufacturing (LOM), Selective Laser Sintering (SLS) (including Direct Metal Laser Sintering (DMLS), also referred to as Direct Metal Laser Melting or Selective Laser Melting), and Stereolithography, among others. Although 3D printing technology is continually developing, the process to build a structure layer-by-layer is complex, inefficient, and prone to failure. An error in the 3D process can lead to weakness or failure in the manufactured part and, therefore, waste, risk, and other unreliability.

The phrase "additive manufacturing apparatus" is used interchangeably herein with the phrase "printing apparatus" and term "printer", and the term "print" is used interchangeably herein with the word "build", referring to an action to build a structure using an additive manufacturing apparatus, regardless of the particular additive manufacturing technology being used to form the structure. As used herein, print and printing refer to the various forms of additive manufacturing and include three-dimensional (3D) printing or 3D rapid prototyping, as well as sintering or melting/fusing technologies. Additive manufacturing systems may use an electron-beam or a laser beam to manufacture builds, for example. Additive manufacturing systems may include multiple electron-beam guns or laser designs. Examples of additive manufacturing or printing techniques include Fused Deposition Modeling, Electron Beam Melting, Laminated Object Manufacturing, Selective Laser Sintering (including Direct Metal Laser Sintering also referred to as Direct Metal Laser Melting or Selective Laser Melting), and Stereolithography among others.

For example, selective laser melting (SLM), also known as direct metal laser melting (DMLM), Direct Metal Laser Sintering (DMLS), or laser powder bed fusion (LPBF), is a rapid prototyping, 3D printing, or additive manufacturing (AM) technique designed to use a high power-density laser to melt and fuse metallic powders together. The SLM process can fully melt the metal material into a solid three-dimensional part, for example.

SLM is a part of additive manufacturing in which a high power density laser is used to melt and fuse metallic powders together. With SLM, thin layers of atomized fine metal powder are evenly distributed onto a substrate plate (e.g., a metal, etc.) using a coating mechanism. The substrate plate is fastened to an indexing table that moves in the vertical (Z) axis. This takes place inside a chamber containing a tightly controlled atmosphere of inert gas, either argon or nitrogen at oxygen levels below 500 parts per million, for example. Once each layer has been distributed, each two-dimensional (2D) slice of the part geometry is fused by selectively melting the powder. Melting of the powder is accomplished with a high-power laser beam, such as an ytterbium (Yb) fiber laser with hundreds of watts, etc. The laser beam is directed in the X and Y directions with two high frequency scanning mirrors. The laser energy is intense enough to permit full melting (welding) of the particles to form solid metal. The process is repeated layer after layer until the part is complete.

Direct Metal Laser Melting (DMLM) or Direct Metal Laser Sintering (DMLS) are particular type(s) of SLM that use a variety of alloys and allows prototypes to be functional hardware made out of the same material as production components. Since the components are built layer by layer, it is possible to design organic geometries, internal features, and challenging passages that could not be cast or otherwise machined. For example, DMLS produces strong, durable metal parts that work well as functional prototypes and/or end-use production parts, for example.

Objects are built directly from a file generated from CAD (computer-aided design) data. The DMLS process begins by slicing 3D CAD file data into layers (e.g., from 20 to 100 micrometers thick, 30-120 µm thick, 50-150 µm thick, etc.), creating a two-dimensional (2D) image of each layer. For example, a format of the 3D CAD file is a .stl file used on most layer-based 3D printing or stereolithography technologies. This file is then loaded into a file preparation software package that assigns parameters, values and physical supports that allow the file to be interpreted and built by different types of additive manufacturing machines, for example.

In DMLS/DMLM, use of a laser to selectively melt thin layers of tiny particles yields objects exhibiting fine, dense, and homogeneous characteristics. The DMLS machine uses a high-powered 200 watt Yb-fiber optic laser, for example. The machine includes a build chamber area including a material dispensing platform and a build platform along with a re-coater blade used to move new powder over the build platform. The technology fuses metal powder into a solid part by melting it locally using the focused laser beam. A melt pool is formed when the powder melts from exposure to the laser beam radiation. Parts are built up additively layer by layer (e.g., using layers 10 micrometers thick, 20 µm thick, 30 µm thick, 50 µm thick, etc.).

The DMLS process begins with a roller spreading a thin layer of metal powder on the print bed. Next, a laser is directed based on the CAD data to create a cross-section of the object by completely melting metal particles. The print bed is then lowered so the process can be repeated to create the next object layer. After all the layers are printed, the excess unmelted powder is brushed, blown, or blasted away. The object typically requires little, if any, finishing.

The machine can include and/or operate with monitoring and control systems and methods, such as iterative learning control, continuous autocalibration, and real-time melt pool monitoring, etc., to introduce a step change in the build process performance and stability, for example. Certain examples enable melt pool monitoring, iterative learning control, continuous auto-calibration, real-time melt pool control, filter monitoring, pump monitoring, jet application monitoring, cathode and beam monitoring, etc.

Other additive manufacturing methods, such as Electron Beam Melting (EBM), can be used for crack-prone metal alloys, such as titanium, etc. With EBM, high-performance electron beam sources and in-situ process monitoring using "self-generated" x-ray imaging and backscatter electron technologies can be used for improved quality control. A binder jet allows fast printing at lower cost with novel support structure designs and clean-burning binders to solve two key technology challenges of sintering distortion and material properties to enable additive manufacturing for automotive, other transportation solutions, powder generation, etc. EBM utilizes a raw material in the form of a metal powder or a metal wire, which is placed under a vacuum (e.g., within a vacuum sealed build chamber). Generally speaking, the raw material is fused together from heating via an electron beam.

Systems that utilize EBM generally obtain data from a 3D computer-aided design (CAD) model and use the data to place successive layers of the raw material using an apparatus to spread the raw material, such as a powder distributor. The successive layers are melted together utilizing a computer-controlled electron beam. As noted above, the process takes place under vacuum within a vacuum sealed build chamber, which makes the process suited to manufacture parts using reactive materials having a high affinity for oxygen (e.g., titanium). In certain examples, the process operates at higher temperatures (up to about 1,200 °C) relative to other additive manufacturing processes, which can lead to differences in phase formation though solidification and solid-state phase transformation.

Examples described herein are applicable to other laser and/or other beam-driven additive manufacturing modalities employing optics beyond those disclosed herein. Such apparatus can also benefit from the improved optical system described and disclosed herein.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

Descriptors "first," "second," "third," etc. are used herein when identifying multiple elements or components which may be referred to separately. Unless otherwise specified or understood based on their context of use, such descriptors are not intended to impute any meaning of priority, physical order, or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

As used herein, the terms "system," "unit," "module," "engine," "component," etc., may include a hardware and/or software system that operates to perform one or more functions. For example, a module, unit, or system may include a computer processor, controller, and/or other logic-based device that performs operations based on instructions stored on a tangible and non-transitory computer readable storage medium, such as a computer memory. Alternatively, a module, unit, or system may include a hard-wires device that performs operations based on hard-wired logic of the device. Various modules, units, engines, and/or systems shown in the attached figures may represent the hardware that operates based on software or hardwired instructions, the software that directs hardware to perform the operations, or a combination thereof.

As used herein, "approximately" and "about" refer to dimensions that may not be exact due to manufacturing tolerances and/or other real world imperfections. As used herein "substantially real time" refers to occurrence in a near instantaneous manner recognizing there may be real world delays for computing time, transmission, etc. Thus, unless otherwise specified, "substantially real time" refers to real time +/- 1 second. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events. As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

An additive manufacturing (AM) machine or device includes a laser, such as to melt power in a powder bed and form layers which combine to build a part. Over time, optical elements for the laser can become distorted from use of the AM machine. This distortion can be caused by a thermal gradient on the optical elements due to a high power nature of the main laser, for example. Such distortion is known as thermal lensing, and thermal lensing can cause a focal point of the laser to deviate from an intended or configured distance. Deviation of the focal point can compound with effects of laser power dependent shifts, drifting over time, contamination, etc., to cause a focal error in the AM machine. Focal error results in build failure, part weakness, and/or other instability in the AM machine as well as resulting built parts.

Many AM machines are calibrated to a desired focal length and spot size during installation. This calibration can be maintained or reset at regular service intervals. In between servicing, a low laser power is utilized for the focal distance. As the laser is used, the focal distance can deviate from the calibrated focal distance, but the focal distance still appears to be normal for diagnostics that are performed while the AM machine is not in operation. As such, deviation of the focal point can escape undetected while introducing defects and/or causing other problems in operation of the AM machine and resulting builds.

Example systems, methods, and apparatus disclosed herein collect, analyze, measure, and adjust the focal distance of an AM machine during operation. In some examples, a second light beam is sent through the same optical path as a main beam, and the reflection is captured. The reflection is then sent to a sensor element to measure the focal error of the optical system during operation. In other examples, a backreflected signal of the main laser is sent to the sensor without involving a second light beam. In some examples, the focal error is sent to a controller that is coupled to an actuator that adjusts a Z-axis position of the main laser beam. By adjusting the position of the main laser beam, the focal distance can be adjusted. In some such examples, the controller and actuator constitute a system of closed loop control, wherein an objective of the system is to maintain a steady-state focal error of zero.

FIGS. 1A-1C illustrate example configurations of an additive manufacturing machine or apparatus. FIG. 1A is a diagram of an example additive manufacturing apparatus 100 according to the present disclosure. In the example of FIG. 1A, the additive manufacturing apparatus 100 is an SLS additive manufacturing system for purposes of illustration, but the additive manufacturing system can be a different laser-based system as well. The example apparatus 100 includes an example cover glass 104, an example scanner 106, an example focus unit 108, an example Z-axis stage 110, an example main laser 112, and an example mirror 116. The example apparatus 100 further includes an example semi-transparent mirror 118, an example measurement laser 120, and an example sensor 128 to measure the focal distance of the example focus unit 108.

In the example of FIG. 1A, the main laser 112 generates a laser beam 114, also referred to herein as the main laser beam, the primary laser beam, or the first laser beam 114. The main laser beam 114 travels through the optical system of the example apparatus 100, which includes the example mirror 116, the example scanner 106, the example focus unit 108, and the example cover glass 104. The main laser beam 114 is focused onto an example powder surface 102 and heats up the surface at a point to fuse material particles together. The example measurement laser 120 generates a measurement laser beam 122 (e.g., 325 mm, 375 mm, 375 nm, etc.). The measurement laser beam 122 is focused through the same optical path of the main laser beam 114, to create a focused measurement beam 124. The focused measurement beam 124 is then reflected off of the powder surface 102 to create a backreflected signal 126. The backreflected signal 126 is sent back through the optical path, until the backreflected signal 126 reaches the example semi-transparent mirror 118. The semi-transparent mirror 118 splits the backreflected signal 126 from the measurement laser beam 122, wherein the signals were combined because they were travelling along the same optical path. The split signals are directed by the mirror 118 to the example sensor 128, which determines a focal length error based on a difference between the measurement beam 122 and the backreflected signal 126.

FIG. 1B illustrates the example additive manufacturing apparatus 100 of FIG. 1A showing an example implementation of the sensor 128. In the illustrated example of FIG. 1B, after the example backreflected signal 126 is split by the semi-transparent mirror 118, the split signal is sent to an example imaging optic 130. In some examples, the example imaging optic 130 includes a plurality of optical components. After the backreflected signal 126 is sent through the imaging optic 130, the backreflected signal is sent to an example cylindrical lens 132. In some examples, the example cylindrical lens 132 is part of the example imaging optic 130. The cylindrical lens 132 focuses the backreflected signal 126 into a line. This focused line signal is then projected onto an example one-dimensional (1D) complementary metal-oxide-semiconductor (CMOS) sensor 134. The 1D CMOS sensor 134 is oriented such that a distance from the cylindrical lens 132 to the example 1D CMOS sensor 134 is a function of the position of the line. The example imaging optic 130 and the example cylindrical lens 132 are designed such that the highest intensity on the sensor 134 is in the middle of the 1D CMOS sensor 134 when the focal distance error is zero (0).

FIG. 1C illustrates another implementation of the example additive manufacturing apparatus 100 according to the present disclosure. In the example implementation of FIG. 1C, an example controller 136 and an example actuator 138 are included with the additive manufacturing apparatus 100. In the example of FIG. 1C, the sensor 128 outputs a focal distance error to the controller 136. The controller 136 generates a control signal for the actuator 138. The controller 136 receives the current focal distance error from the sensor 128 and stores a history of the error from the sensor 128. The controller 136 determines the control signal according to its controller implementation. In some examples, the controller 136 is implemented using a proportional-integral-derivative (PID) controller, or a proportional-integral (PI) control. In other examples, other control schemes may be implemented, such as a bang-bang control, a proportional-derivative (PD) control, a proportional (P) control, etc.

After the controller 136 outputs a control signal, the actuator 138 adjusts the Z-axis stage 110 (also referred to as the Z-stage 110) according to the control signal. The Z-axis stage 110 is a mechanical component providing vertical (e.g., up and down) movement of the laser beam 114. As the Z-axis stage 110 is adjusted, the focal distance of the system is also adjusted, thus completing the closed-loop control system. The adjustment is to reduce the amount of focal distance error of the system. However, sometimes, overshoot occurs, such as in PID control systems, and further measurement and correction are facilitated.

While the examples of FIGS. 1A-1C illustrate an example additive manufacturing apparatus 100 including a probe laser 120 to create a separate measurement beam 122 in addition to the main laser beam 114, FIGS. 2A-2C illustrate an alternative additive manufacturing apparatus 200 without an added measurement or probe laser 120. In the example configuration of FIGS. 2A-2C, the backreflection of the laser beam 114 alone is evaluated to determine focal length error.

FIG. 2A is a schematic showing an example additive manufacturing apparatus 200 according to the present disclosure. The example additive manufacturing apparatus 200 of FIG. 2A is similar to the example additive manufacturing system 100 of FIG. 1A without the example measurement laser 120. In the example of FIG. 2A, the additive manufacturing apparatus 200 (e.g., an SLS and/or other type of additive manufacturing system) includes the cover glass 104, the scanner 106, the focus unit 108, the Z-axis stage 110, an example main laser 112, and an example mirror 116. The example additive manufacturing apparatus 200 also includes the semi-transparent mirror 118 and the sensor 128 to aid in the measurement of the focal distance of the focus unit 108.

In the example of FIG. 2A, the main laser 112 generates a main laser beam 114. The main laser beam 114 travels through the optical system of the example system 100, which includes the example mirror 116, the example scanner 106, the example focus unit 108, and the example covered glass 104. The main laser beam 114 is focused onto the example powder surface 102 and heats up the surface at a point to fuse material particles together. In this example, the main laser beam 114 is reflected off of the powder surface 102 to create an example backreflected main laser beam 240. The backreflected main laser beam 240 is sent back through the optical path, until it eventually reaches the example semi-transparent mirror 118. The semi-transparent mirror 118 splits the backreflected main laser beam 240 from the main laser beam 114 and directs the backreflected main laser beam 240 to the example sensor 128, which determines the focal length error.

FIG. 2B is another diagram of an example additive manufacturing apparatus 200 according to the disclosure. It is largely similar to FIG. 2A, but the example sensor 128 is replaced with a more detailed, example implementation of such a sensor. As shown in the example of FIG. 2B, the sensor 128 includes the imaging optic 130, the cylindrical lens 132, and the 1D CMOS sensor 134.

FIG. 2C is another diagram of an example additive manufacturing apparatus 200 according to the disclosure. It is largely similar to FIG. 2A, but there is an addition of a closed-loop feedback system. The example apparatus 200 of FIG. 2C further includes the controller 136 and the actuator 138.

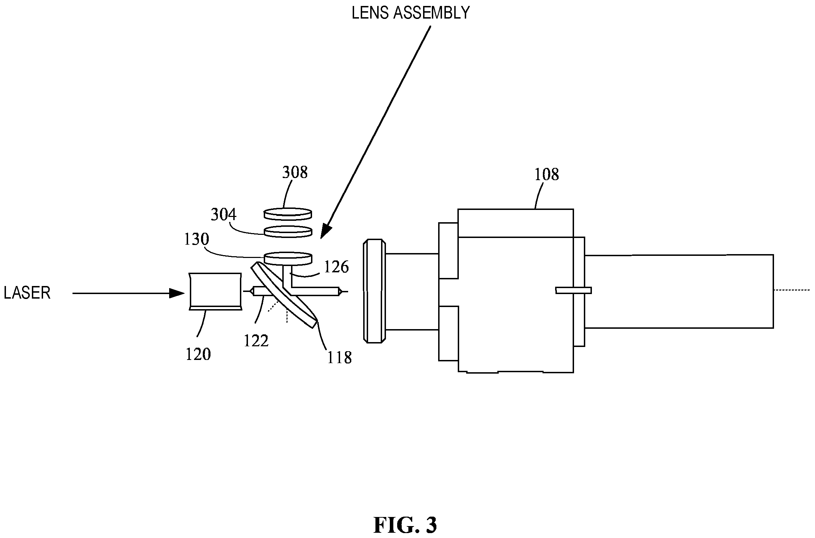

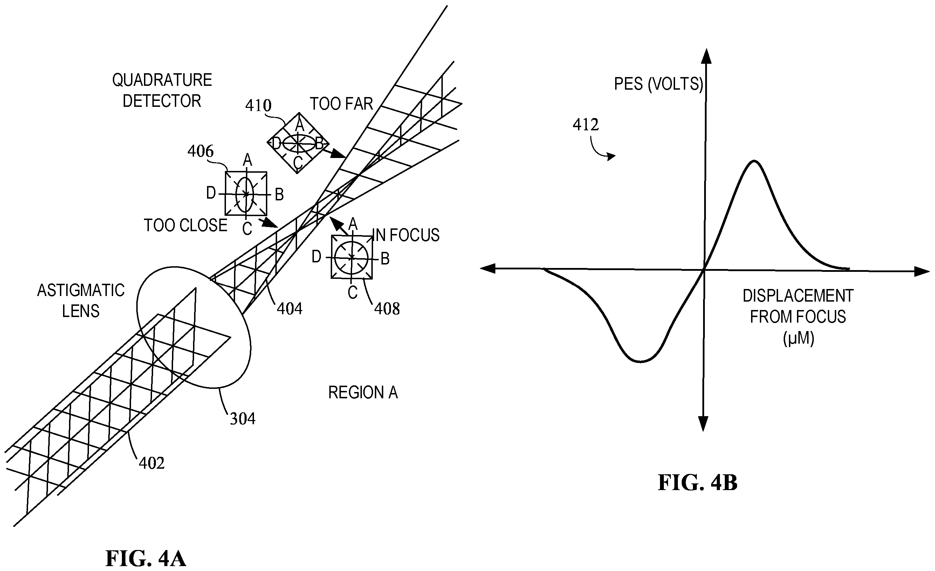

FIG. 3 is a diagram illustrating an example arrangement of the measurement laser 120, the focus unit 108, and the sensor 128. The sensor 128 is implemented with an example astigmatic lens 304 and an example quadrant diode sensor 308. This implementation of the sensor 128 and its operation will be explained in further detail in conjunction with FIGS. 4-5. The measurement laser 120 generates the measurement laser beam 122. The measurement beam 122 is transmitted through the focus unit 108, which focuses the beam 122. After the beam 122 is focused, the beam 122 is reflected off of the example powder surface 102 (not shown), and the backreflected signal 126 is captured and sent back through the same optical path which includes the focus unit 108. Since the backreflected signal 126 and the measurement laser beam 122 share the same optical path, they are coupled together. The example semi-transparent (split) mirror 118 splits the backreflected signal 126 from the measurement laser beam 122, and sends the backreflected signal 126 to the imaging optic 130. The imaging optic 130 and the astigmatic lens 304 modify the backreflected signal 126, and project it onto the example quadrant diode sensor 308. By measuring characteristics of the modified signal, the quadrant diode sensor 308 determines a magnitude and polarity of the focal distance error of the system.

FIG. 4A is a diagram illustrating the principles of operation of an example embodiment of the example sensor 128 (not shown in this view). This example is characterized by an example astigmatic lens 304. In the example of FIG. 4A, a backreflected signal 402 is sent to an astigmatic lens 304. The lens 304 forms a modified beam 404. Depending on the distance of the sensor 128 from the astigmatic lens 304, a cross-section of the modified beam 404 will have different characteristics. If the focal distance error is 0, then the sensor element 128 will intersect with the modified beam 404 to have an in-focus cross section 408. Note that this cross-section 408 is circular, with equal amounts of light in all four quadrants.

If the focal distance of the system (e.g., the example apparatus 100, the example apparatus 200, etc.) is longer than the desired focal distance, then the sensor element 128 will intersect with the example modified beam 404 to have a cross-section 406 that is too close. In this example, the strength of signal in quadrants A and C exceeds the strength of signal in quadrants B and D.

If the focal distance of the system is shorter than the focal distance target, then the sensor element 128 will intersect with the modified beam 404 to have a cross section 410 that is too far. In this example, the strength of signal in quadrants B and D exceeds the strength of signal in quadrants A and C.

In both the "too close" and "too far" scenarios, the difference in strength between the two pairs of quadrants is larger as the focal distance error increases, at least in the regions where the focal distance error is closest to 0. As such, the respective cross section 406, 410 is out of focus, rather than in focus as with the example cross section 408.

FIG. 4B shows an example graph 412 that shows a displacement from focus on the X-axis and a corresponding sensor signal on the Y-axis. Positive displacement is defined as displacement that exceeds the desired focal distance. This signal is calculated by taking the strength of the signal in quadrants A and C and subtracting the strength of the signal in quadrants B and D. The signal strength of the sensor 128 has an almost linear relationship with the focal distance error, at least in the region closest to where the focal distance error is 0.

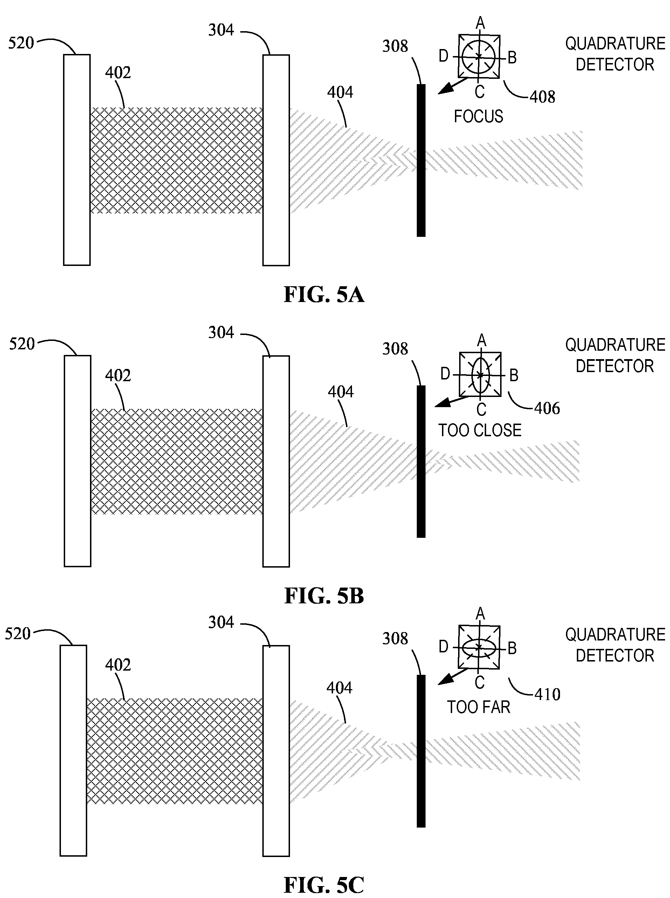

FIGS. 5A-5C illustrate the example focal scenarios 406-410 of FIG. 4A. An example imaging lens 520 sends a backreflected signal 402 to the astigmatic lens 204. The astigmatic lens 204 modifies the signal to create a modified beam 404 and project the modified beam 400 onto the quadrant diode sensor 308. An intersection of the modified beam 404 and the quadrant diode sensor 308 forms a cross section 406-410. Three examples of possible cross sections are described herein.

FIG. 5A shows an example "in-focus" cross section 408 wherein the focal error is 0. In the example of FIG. 5A, the in-focus cross section 408 is circular, and all four quadrants (A, B, C, D) measure an equal amount of light.

FIG. 5B shows an example "too close" cross section 406 when the focal distance is too long, and, thus, the quadrant diode sensor 308 is too close to the astigmatic lens 204 relative to the modified beam 404. In the example of FIG. 5B, the too close cross section 406 is elliptical, and quadrants A and C measure more light than quadrants B and D. Since the example quadrant diode sensor 308 knows which regions contain a stronger signal, the sensor 308 can determine an estimate of the eccentricity of the ellipse, thus providing an analog signal for the focal distance error, as well as its polarity.

FIG. 5C shows an example "too far" cross section 410 when the focal distance is too short, and, thus, the quadrant diode sensor 308 is too far from the astigmatic lens 204 relative to the modified beam 404. In the example of FIG. 5C, the too far cross section 410 is elliptical, and quadrants B and D measure more light than quadrants A and C. Since the quadrant diode sensor 308 knows which regions contain a stronger signal, the sensor 308 can determine an estimate of the eccentricity of the ellipse, thus providing an analog signal for the focal distance error, as well as its polarity.

FIG. 6A is a diagram illustrating the operation of an example configuration of the sensor 128. The example of FIG. 6A is characterized by the example cylindrical lens 132 and the example 1D CMOS sensor 134. The example imaging optic 130 projects an example signal 602 onto the example cylindrical lens 132. The cylindrical lens 132 focuses the light signal into a line. The location of the line is dependent on the signal from the imaging optic. The imaging optic 130 is designed with the example focus unit 108, so that the highest intensity on the example 1D CMOS sensor 134 is in the middle of the sensor element, as shown in the example in focus projected laser line 608, when the focus point is exactly on the example powder surface 102, resulting in a focal distance error of 0. If the focal length is non-zero, then the distance of the focus point from the cylindrical lens 132 is also non-zero, resulting in a different projected position on the 1D CMOS sensor 134. If the focal distance is less than the desired focal distance, then the cylindrical lens 132 creates an example too close projected laser line 606, which intersects with the 1D CMOS sensor 134 at the point where it is closest to the example cylindrical lens 132. If the focal distance is greater than the desired focal distance, then the example cylindrical lens 132 creates an example too far projected laser line 610, which intersects with the 1D CMOS sensor 134 at the point where it is furthest from the cylindrical lens 132. In FIG. 6A, the line is located towards the top if the focal distance is less than the desired focal distance, in the center if the focal distance error is 0, and towards the bottom if the focal distance is greater than the desired focal distance. Note that the 1D CMOS sensor 134 is tilted toward the cylindrical lens 132, such that the distance from the cylindrical lens 132 to the 1D CMOS sensor 134 is a function of the sensor position.

FIG. 6B is a diagram illustrating another example configuration of the sensor 128. The example of FIG. 6B is also characterized by the cylindrical lens and the 1D-CMOS sensor. The example of FIG. 6B is identical in most respects to the example sensor 128 of FIG. 6A, except for the position of the example 1D CMOS sensor 134. Instead of being tilted to have the distance from the example cylindrical lens 132 to the 1D CMOS sensor 134 be a function of the sensor position, the configuration of FIG. 6B utilizes example step mirrors 614. The step mirrors 614 are placed such that the distance from the cylindrical lens 132 to the 1D CMOS sensor 134 is still dependent on the location of the focused line. Aside from this difference in configuration, the example of FIG. 6A operates similar to the example of FIG. 6B.

FIG. 6C shows a graph of an intensity profile 616 of the 1D CMOS sensor 134 as a function of the position on the 1D CMOS sensor 134. As shown in the example of FIG. 6C, that the highest intensity on the example 1D CMOS sensor 134 is in the middle of the sensor element.

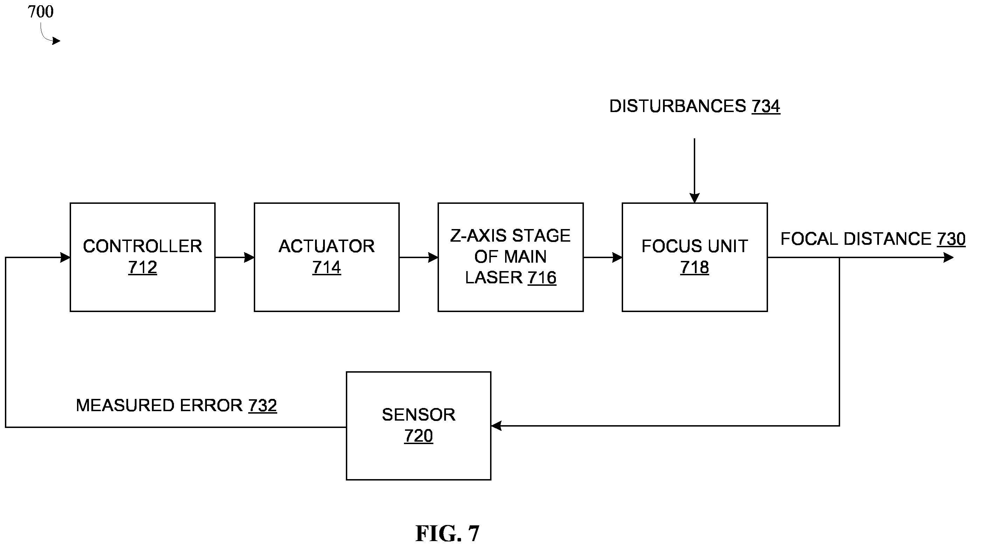

FIG. 7 is a control diagram representative of the example closed-loop feedback system 100 illustrated in FIG. 1C. An example closed-loop system 700 operates to reduce an example measured error 732.

As shown in the example of FIG. 7, an example controller 712 sends a control signal to an example actuator 714 calculated from the example measured error 732. The example controller 712 can be implemented in many ways, including but not limited to PID control, PI control, P control, and bang-bang control.

After the example actuator 714 receives the control signal, it adjusts an example Z-axis stage of a main laser 716. The controller 712 can send a control signal to instruct the actuator 714 to move the Z-axis stage of a main laser 716 to a specified location or move it in a direction at a specified speed. In some examples, such as when the controller 712 uses a bang-bang implementation, the actuator 714 can only move at one speed.

A main laser beam travels through the now adjusted example Z-axis stage 716 and an example focus unit 718. The two elements in series determine the example focal distance 730. Not only is the focus unit 718 affected by the position of the Z-axis stage 716, the focus unit 718 is also affected by example disturbances 734 such as thermal lensing, drifts over time, laser power dependent shifts, and contamination.

The example focal distance 730 is then measured by the example sensor 720. The sensor 720 can be implemented by one of the examples discussed above. The sensor 720 then outputs the example measured error 732, which is then fed back to the example controller 712. This completes the example closed-loop system 700.

While example implementations of the additive machine apparatus 100, 200 and its components and configuration are illustrated in FIGS. 1-7, one or more of the elements, processes and/or devices may be combined, divided, re-arranged, omitted, eliminated and/or implemented in any other way. Further, one or more of the elements of FIGS. 1-7 may be implemented by hardware, software, firmware and/or any combination of hardware, software and/or firmware. Thus, for example, any of the example elements of FIGS. 1-7 can be implemented by one or more analog or digital circuit(s), logic circuits, programmable processor(s), programmable controller(s), graphics processing unit(s) (GPU(s)), video processing unit(s) (VPU(s)), accelerator card(s), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example elements of FIGS. 1-7 is/are hereby expressly defined to include a non-transitory computer readable storage device or storage disk such as a memory, a digital versatile disk (DVD), a compact disk (CD), a Blu-ray disk, etc. including the software and/or firmware. Further still, the elements of FIGS. 1-7 may include one or more elements, processes and/or devices in addition to, or instead of, those illustrated in FIGS. 1-7, and/or may include more than one of any or all of the illustrated elements, processes, and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

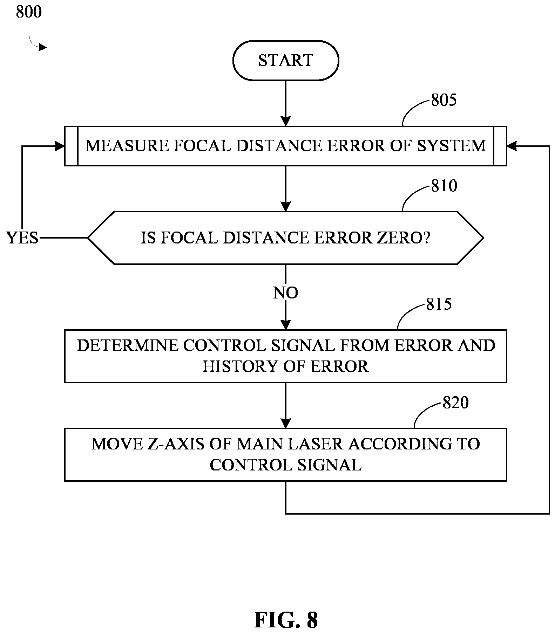

Flowcharts representative of example hardware logic, machine readable instructions, hardware implemented state machines, and/or any combination thereof for implementing and/or operating the example apparatus 100, 200, etc., are shown in FIGS. 8-10. The machine readable instructions may be one or more executable programs or portion(s) of an executable program for execution by a computer processor and/or processor circuitry The program may be embodied in software stored on a non-transitory computer readable storage medium such as a CD-ROM, a floppy disk, a hard drive, a DVD, a Blu-ray disk, or a memory associated with a processor, but the entire program and/or parts thereof could alternatively be executed by a device other than the processor and/or embodied in firmware or dedicated hardware. Further, although the example program is described with reference to the flowcharts illustrated in FIGS. 8-10, many other methods of operating and/or implementing the example apparatus 100, 200 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example process(es) of FIGS. 8-10 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

FIG. 8 is a flowchart representative of a closed-loop feedback control process flow 800 that drives operation of the example apparatus 100 and is representative of operation of the example closed-loop system 700. The closed-loop system operates 700, for example, to reduce the steady-state focal error of the system to 0.

The example system 100 measures the focal distance error of the system. (Block 805). The example sensor 128 calculates the focal distance error from the desired focal distance, as described above. In some examples, the desired focal distance is set during installation or maintenance of the AM machine and cannot be changed until the next service interval.

The sensor 128 then determines if the calculated focal distance error is zero. (Block 810). If the focal distance error is zero (e.g., Block 810 returns a result of YES), the system returns to Block 805 and continues to monitor and measure the focal distance error.

If the calculated focal distance error is not zero (e.g., Block 810 returns a result of NO), then the example controller 136 determines a control signal using not only the current focal distance error, but also the history of the focal distance error, and sends this control signal to the example actuator 138. (Block 815). In some examples, further calculations are done with the history of the control signal, such as determining its integral or derivative. In some such examples, the controller 136 is a PID or PI controller. In other examples, the history of the error is not taken into account when calculating the control signal. This control signal aims to decrease the focal distance error of the system.

When the example actuator 138 receives the control signal from the example controller 136, the actuator 138 moves the example Z-axis stage 110 according to the control signal received. (Block 820). After the Z-axis stage 110 has been adjusted, the system returns to Block 805 to continue measuring and monitoring the system.

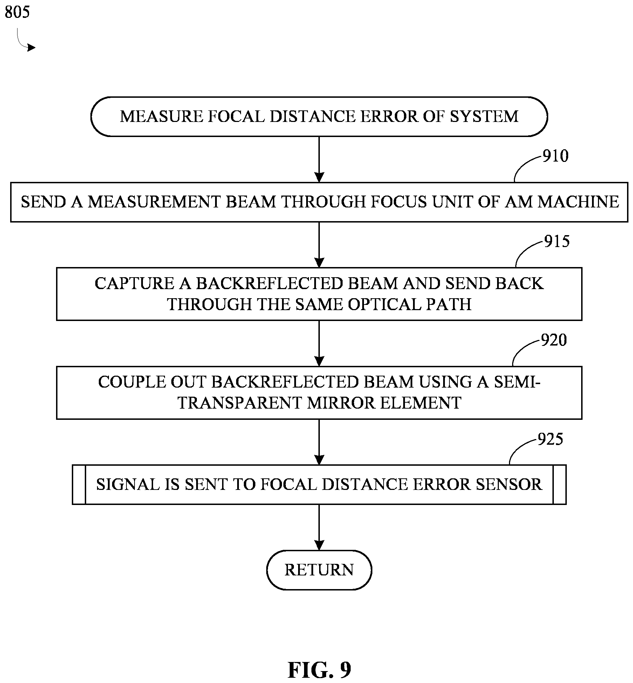

FIG. 9 is a flowchart representative of the measurement system of the example system 100 instantiated to implement block 805 of the closed-loop feedback control process flow 800 to measure the focal distance error of an AM machine.

First, an example measurement laser beam 122 is sent through the example focus unit 108 of the example AM machine. (Block 910). In some examples, the measurement laser beam 122 is a second separate measurement beam that is coupled to an example main laser beam 114 of the example AM machine. In some such examples, the wavelength of this second separate measurement beam is 375 nm. In some other examples, the measurement beam is the example main laser beam 114 of the AM machine.

After the measurement laser beam 122 is sent through the focus unit 108, the measurement laser beam 122 is reflected off of the example powder surface 102 to create an example backreflected signal 126, and this example backreflected signal 126 is sent back through the same optical path. (Block 915). The backreflected signal 126 is then separated from the example measurement laser beam 122 through the semi-transparent or "split" mirror 118. (Block 920).

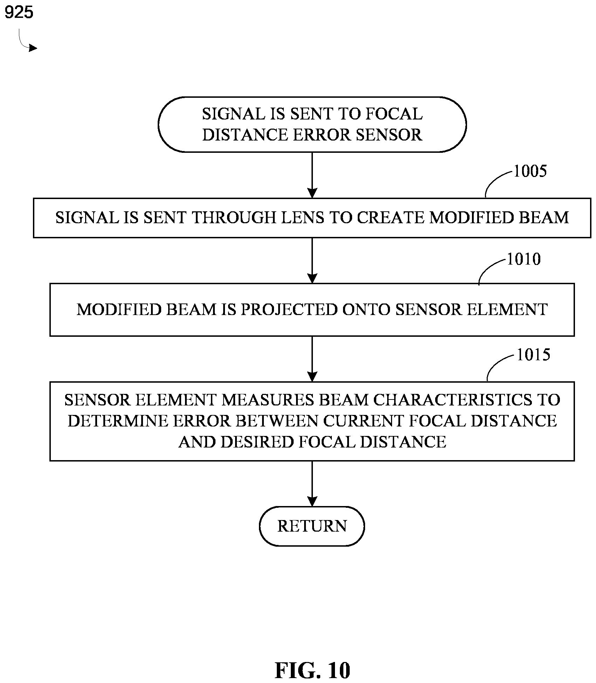

The separated signal is sent to the example sensor 128 where the focal distance error is measured. (Block 925). The example sensor 128 has three main elements: an imaging lens, a modifying lens, and a measurement sensor. Details regarding operation of the sensor 128 have been disclosed above in conjunction with FIGS. 5-6C and will continue to be explained in greater detail in conjunction with FIG. 10.

FIG. 10 is a flowchart representative of the example sensor 128 instantiated to implement block 925, to calculate the focal distance error of an AM machine from a backreflected signal.

First, the signal is sent through an example imaging optic 130 to create an example modified beam 404. (Block 1005). In some examples described above, the imaging optic 130 includes a cylindrical lens 132 or an astigmatic lens 304. The modified beam 404 is then projected onto an example sensor element. (Block 1010). In some examples above, the sensor element is a 1D CMOS sensor 134 or a quadrant diode sensor 308.

The example sensor element then measures characteristics of the example modified beam 404 to determine an error between the current focal distance and the desired focal distance. (Block 1015). This process is explained in greater detail above, in conjunction with FIGS. 4-6C.

As such, systems and associated methods described above measure the generated focus length of an additive laser system on the powder surface on a powder bed of an additive manufacturing apparatus through optical elements. An additional laser beam can be coupled into the optical system. The beam travels along the same path as the formative laser beam through the focusing optics down to the powder surface, etc. As such, the additional "measurement" beam experiences the same focal length including all effects changing the focal length of the laser optics, such as thermal lensing, etc. The measurement laser beam is reflected by the powder bed, and can be captured in the optical system. By detecting the back focus position, the main focal length can be calculated. Calculation using a reflection of the measurement beam and/or a reflection of the main laser bean forms a system with closed loop focus control for the main laser beam.

Further examples are provided by the subject matter of the following clauses:

An example apparatus for measuring an error in focal length from a desired focal length in an additive manufacturing (AM) machine includes: a main laser to create a main laser beam of the AM machine, the main laser beam used to fuse particle powder together in an AM process; a focus unit to focus the main laser beam at a specified distance, the focus unit also including a measurement beam; a semi-transparent mirror to split a backreflected signal, created from a reflection of the measurement beam from a powder surface, from the measurement beam; and a sensor element to measure a focal distance error from the backreflected signal.

The apparatus of preceding clause, wherein the measurement beam is the same beam as the main laser beam of the AM machine.

The apparatus of any preceding clause, wherein the measurement beam is a separate sensor beam created by a measurement laser, the separate sensor beam coupled to the main laser of the AM machine.

The apparatus of any preceding clause, wherein the sensor element includes: a cylindrical lens to focus the backreflected signal into a line; and a one-dimensional (1D) complementary metal-oxide-semiconductor (CMOS) sensor to determine an intensity location of the line.

The apparatus of any preceding clause, wherein the sensor element includes: an astigmatic lens to modify the backreflected signal; and a quadrant diode to detect a spot shape of the modified signal at a desired focal length.

The apparatus of any preceding clause, further including: a feedback controller to determine a control signal based on the focal distance error from the sensor element; and an actuator to adjust a Z-axis stage of the AM machine according to the control signal determined by the feedback controller.

The apparatus of any preceding clause, wherein the feedback controller and actuator are part of a closed loop control system for reducing a steady state focal distance error.

An example method for monitoring a focal distance of an additive manufacturing (AM) process includes: sending a sensing laser through an optical path of an AM machine; capturing a backreflected signal created from a reflection of the sensing laser from a powder surface; transmitting the backreflected signal back through the optical path; separating the backreflected signal from the sensing laser using a semi-transparent mirror; and measuring a focal distance error using a sensor element and the separated backreflected signal.

The method of any preceding clause, wherein the optical path includes a focus unit used to focus a main laser of the AM machine.

The method of any preceding clause, wherein the measuring using the sensor element further includes: focusing the backreflected signal into a line using a cylindrical lens to form a focused line signal; projecting the focused line signal onto a 1D CMOS sensor; and measuring a position of the line on the 1D CMOS sensor to determine a direction and magnitude of the focal distance error.

The method of any preceding clause, wherein the measuring using the sensor element further includes: modifying the backreflected signal using an astigmatic lens to form a modified signal; projecting the modified signal onto a quadrant diode to form a projected signal; and measuring a distribution of the projected signal using the quadrant diode to determine a direction and magnitude of the focal distance error.

The method of any preceding clause, wherein the sensing laser is a main laser of the AM machine.

The method of any preceding clause, wherein the sensing laser is configured to measure the focal distance error, and wherein the sensing laser is coupled to a main laser of the AM machine.

The method of any preceding clause, further including: determining a control signal using a controller and the measured focal distance error from the sensor element; and changing a Z-axis position of a main laser of the AM machine according to the control signal generated by the controller.

The method of any preceding clause, wherein the method executes in a closed-loop control system to reduce a steady-state focal distance error to zero.

An example optical system for measuring a focal distance error, to be used in conjunction with an additive manufacturing (AM) machine, the system includes: a measurement laser to send a laser signal through a focus unit of the AM machine; a semi-transparent mirror to split a backreflected signal coupled to the measurement laser, the backreflected signal created from a reflection of the laser signal off of a powder surface; and a sensor element to calculate a magnitude and direction of the focal distance error from the backreflected signal.

The system of any preceding clause, wherein the sensor element includes: a cylindrical lens to focus the backreflected signal into a line; and a 1D CMOS sensor to determine an intensity location of the line.

The system of any preceding clause, wherein the sensor element includes: an astigmatic lens to modify the backreflected signal; and a quadrant diode to detect a spot shape of the modified signal at a desired focal length.

The system of any preceding clause, further including: a controller to analyze error data from the sensor element to calculate a control signal; and an actuator to adjust a Z-axis stage of the AM machine according to the control signal provided by the controller.

The system of any preceding clause, wherein the controller and actuator are part of a closed loop control system to reduce a steady state focal distance error.

While particular examples have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. An apparatus (200) for measuring an error in focal length from a desired focal length in an additive manufacturing (AM) machine (200) comprising:
a main laser (112) to create a main laser beam of the AM machine (200), the main laser beam used to fuse particle powder together in an AM process;
a focus unit (108) to focus the main laser beam at a specified distance, the focus unit (108) also including a measurement beam;
a semi-transparent mirror (118) to split a backreflected signal, created from a reflection of the measurement beam from a powder surface, from the measurement beam; and
a sensor element (128) to measure a focal distance error from the backreflected signal.

2. The apparatus of claim 1 wherein the measurement beam is the same beam as the main laser beam of the AM machine.

3. The apparatus of claim 1 wherein the measurement beam is a separate sensor beam created by a measurement laser (120), the separate sensor beam coupled to the main laser (112) of the AM machine.

4. The apparatus of claim 1 wherein the sensor element (128) includes:
a cylindrical lens (132) to focus the backreflected signal into a line; and
a one-dimensional (1D) complementary metal-oxide-semiconductor (CMOS) sensor (134) to determine an intensity location of the line.

5. The apparatus of claim 1 wherein the sensor element (128) includes:
an astigmatic lens (304) to modify the backreflected signal; and
a quadrant diode (308) to detect a spot shape of the modified signal at a desired focal length.

6. The apparatus of claim 1 further including:
a feedback controller (712) to determine a control signal based on the focal distance error from the sensor element (128); and
an actuator (714) to adjust a Z-axis stage of the AM machine according to the control signal determined by the feedback controller (712).

7. The apparatus of claim 6 wherein the feedback controller (712) and actuator (714) are part of a closed loop control system for reducing a steady state focal distance error.

8. A method (800) for monitoring a focal distance of an additive manufacturing (AM) process, said method comprising:
sending a sensing laser through an optical path of an AM machine (200);
capturing a backreflected signal created from a reflection of the sensing laser from a powder surface;
transmitting the backreflected signal back through the optical path;
separating the backreflected signal from the sensing laser using a semi-transparent mirror; and
measuring a focal distance error using a sensor element (128) and the separated backreflected signal.

9. The method of claim 8 wherein the optical path includes a focus unit (108) used to focus a main laser (112) of the AM machine.

10. The method of claim 8 wherein the measuring using the sensor element further includes:
focusing the backreflected signal into a line using a cylindrical lens (132) to form a focused line signal;
projecting the focused line signal onto a 1D CMOS sensor (134); and
measuring a position of the line on the 1D CMOS sensor to determine a direction and
magnitude of the focal distance error.

11. The method of claim 8 wherein the measuring using the sensor element further includes:
modifying the backreflected signal using an astigmatic lens (304) to form a modified signal;
projecting the modified signal onto a quadrant diode (308) to form a projected signal; and
measuring a distribution of the projected signal using the quadrant diode to determine a direction and magnitude of the focal distance error.

12. The method of claim 8 wherein the sensing laser is a main laser (112) of the AM machine.

13. The method of claim 8 wherein the sensing laser is configured to measure the focal distance error, and wherein the sensing laser is coupled to a main laser of the AM machine.

14. The method of claim 8 further including:
determining a control signal using a controller (712) and the measured focal distance error from the sensor element; and
changing a Z-axis position of a main laser of the AM machine according to the control signal generated by the controller.

15. The method of claim 14, wherein the method executes in a closed-loop control system to reduce a steady-state focal distance error to zero.
